**Europäisches Patentamt**

**European Patent Office**

**Office européen des brevets**

(19)

(11) Veröffentlichungsnummer : **0 200 071**
**B1**

(12)

# EUROPÄISCHE PATENTSCHRIFT

(45) Veröffentlichungstag der Patentschrift :
**06.07.88**

(51) Int. Cl.⁴ : **C 03 B 37/06, D 01 D 5/14**

(21) Anmeldenummer : **86105095.3**

(22) Anmeldetag : **14.04.86**

(54) **Vorrichtung zur Herstellung von feinen Mineralfasern.**

(30) Priorität : **27.04.85 DE 3515346**

(43) Veröffentlichungstag der Anmeldung :
**05.11.86 Patentblatt. 86/45**

(45) Bekanntmachung des Hinweises auf die Patenterteilung : **06.07.88 Patentblatt 88/27**

(84) Benannte Vertragsstaaten :
**DE FR GB IT**

(56) Entgegenhaltungen :
**EP-A- 0 038 989**
**EP-A- 0 119 426**
**US-A- 3 532 479**

(73) Patentinhaber : **BAYER AG**
**Konzernverwaltung RP Patentabteilung**
**D-5090 Leverkusen 1 Bayerwerk (DE)**

(72) Erfinder : **Wagner, Wolfram, Dr.**
**Zeisigstrasse 9**
**D-4047 Dormagen (DE)**
Erfinder : **Nyssen, Peter Roger, D.I.**
**Magnolienstrasse 6**
**D-4047 Dormagen 11 (DE)**
Erfinder : **Espanion, Günter**
**Neue Kempener Strasse 306**
**D-5000 Köln 60 (DE)**
Erfinder : **Berkenhaus, Dirk**
**Urftstrasse 31**
**D-5000 Köln 50 (DE)**
Erfinder : **Haladuda, Günter**
**Rosenkranz 15**
**D-5093 Burscheid (DE)**
Erfinder : **van Pey, Hans-Theo**
**Am Puetzbach 11**
**D-5152 Lipp (DE)**
Erfinder : **Schott, Karl-Heinz**
**Am Norfbach 18**
**D-4047 Dormagen 11 (DE)**

Jouve, 18, rue St-Denis, 75001 Paris, France

## Beschreibung

Die Erfindung betrifft eine Vorrichtung zur Herstellung feiner Mineralfasern, insbesondere Glasfasern und Diabasfasern, nach dem Düsenblasverfahren. Vorrichtungen dieser Art bestehen aus einem Schmelzetiegel mit einer Reihe von Austrittsöffnungen, aus denen Primärfäden austreten, die im Bereich der Tiegelaustrittsöffnungen von dem mit hoher Strömungsgeschwindigkeit strömenden Blasmedium erfaßt werden, wobei mit zunehmendem axialen Abstand von den Austrittsöffnungen die Querkomponente der Strömung zugunsten der Längskomponente abnimmt und die anschließend in einer divergierenden Ziehdüse durch das eingesaugte Blasmedium zerfasert werden. An den divergierenden Teil der Ziehdüse schließt sich dann ein Unterschalldiffusor zur Reduzierung der Strömungsgeschwindigkeit an.

Das Düsenblasverfahren ist dadurch charakterisiert, daß aus einem die Mineralschmelze enthaltenden Tiegel unter der Wirkung der Schwerkraft Schmelzeströme austreten, die in einer Ziehdüse unter der Wirkung von hoher Strömungsgeschwindigkeit im wesentlichen parallel zu den Schmelzeströmen durch strömendes Gas zerfasert, ausgezogen und unter die Erweichungstemperatur abgekühlt werden. Es handelt sich dabei im Prinzip um ein sehr altes Verfahren, das bereits in den deutschen Patentschriften 694 182 und 803 925 vorbeschrieben ist. In neuerer Zeit ist das Düsenblasverfahren weiter entwickelt und verfeinert worden (siehe EP-A-66 506 und die den Oberbegriff des Anspruchs 1 bildende EP-A-38 989).

Der Durchmesser der nach dem Düsenblasverfahren hergestellten Fasern liegt im allgemeinen in der Größenordnung von einigen µm. Probleme treten auf, wenn Fasern mit einem Durchmesser < 1 µm hergestellt werden sollen. Versuche an herkömmlichen Anlagen durch Einstellung der Betriebsparameter zu immer feineren Fasern zu gelangen, haben bisher nicht zum gewünschten Erfolg geführt. Es wurden Instabilitäten beobachtet (häufiger Faserabriß und Auftreten von Schmelzekügelchen), die zu einem ungleichmäßigen Produkt führen und daher nicht toleriert werden können. Hier setzt die Erfindung an.

Der Erfindung liegt die Aufgabe zugrunde eine nach dem Düsenblasverfahren arbeitende Vorrichtung zur Herstellung von Mineralfasern mit einem Durchmesser zwischen 0,1 µm und 5 µm mit einer möglichst engen Durchmesserverteilung, d. h. einem möglichst geringen Anteil an Fasern mit einem anderen als dem gewünschten Durchmesser, zu entwickeln.

Diese Aufgabe wird erfindungsgemäß bei der eingangs beschriebenen Vorrichtung durch folgende Merkmale gelöst:

a) Der Durchmesser der Tiegelaustrittsöffnungen beträgt 0,2 bis 1,5 mm, vorzugsweise 0,3 bis 0,8 mm.

b) Der Eintrittsquerschnitt eines, sich in Strömungsrichtung erweiternden Einlaufteils weist an der Oberkante der Ziehdüse eine scharfkantige Begrenzung auf.

c) Die Ziehdüse ist mit ihrem Einlaufteil in einem Abstand von 0,3 mm bis 4 mm, vorzugsweise 0,5 mm bis 2 mm, unterhalb der Austrittsöffnungen angeordnet.

d) Die Länge des sich erweiternden Einlaufteils beträgt 2,5 bis 9 mm, vorzugsweise 2,5 bis 4 mm.

e) Die Strömungsgeschwindigkeit des Blasmediums beträgt am Ende des Einlaufteils 400 m/sec bis 600 m/sec bei einem Druck von 0,1 bar (0,01 MPa) bis 0,4 bar (0,04 MPa), wobei dieser Druck über einen nachfolgenden Abschnitt von 30 bis 100 mm konstant bleibt.

Bevorzugte Ausführungsformen der Erfindung sind in den Unteransprüchen beschrieben. Mit der erfindungsgemäßen Vorrichtung gelingt die Herstellung feinster Mineralfaservliese mit einem Faserdurchmesser zwischen 0,1 µm und 5 µm, vorzugsweise zwischen 0,1 µm und 2 µm. Es hat sich gezeigt, daß die Anlage über einen langen Zeitraum störungsfrei arbeiten kann und ein gleichmäßiges Produkt liefert. Unter « Gleichmäßigkeit » wird dabei verstanden, daß die Fasern in erster Linie einen einheitlichen Durchmesser besitzen und daß keine Perlen auftreten. Ein weiterer Vorteil besteht darin, daß im Vergleich zu den bisher bekannten Verfahren eine wirtschaftlichere Herstellung von feinen Mineralfasern möglich ist.

Es leuchtet ein, daß man zur Herstellung feiner Fasern mit möglichst kleinen Austrittsöffnungen arbeiten muß, um von vornherein Primärfäden mit einem möglichst kleinen Startdurchmesser zu erzeugen, die dann in der Ziehdüse weiter aufgefasert werden. Dabei besteht aber die Schwierigkeit, daß Primärfäden mit einem so kleinen Durchmesser häufig abreißen und Tropfen bzw. Perlen entstehen. Die Herstellung von zusammenhängenden feinen Primärfäden gelingt erst aufgrund der kombinierten Wirkung der oben beschriebenen Maßnahmen. Im Bereich der Tiegelaustrittsöffnungen werden die Primärfäden mit hoher Luftgeschwindigkeit angeblasen und bis zum Eintritt in den Einlaufteil einem starken Druckgradienten in Längsrichtung ausgesetzt. Der scharfkantige Einlauf in Verbindung mit dem geringen Abstand zwischen der Oberkante des Düseneinlaufes und den Austrittsöffnungen bewirkt den hohen, zum Rand hin zunehmenden Druckgradient. Der kurze Einlaufteil (Länge 2,5 bis 9 mm) trägt ebenfalls dazu bei, daß der Druckgradient zum Rand hin stark zunimmt. Die Maßnahme e) besagt schließlich, daß innerhalb der Ziehdüse im Anschluß an den Einlaufteil eine Zone mit einem möglichst langen Düsenplateau im Überschallströmungsbereich vorhanden ist, in der die an sich schon sehr dünnen Primärfäden weiter bis zu dem gewünschten Enddurchmesser ausgezogen werden.

Im folgenden wird die Erfindung anhand von Zeichnungen und Ausführungsbeispielen näher erläutert. Es zeigen

Fig. 1 die erfindungsgemäße Vorrichtung mit Schmelzetiegel und Ziehdüse in Aufrißdarstellung.

Fig. 2 den Einlaufteil der Ziehdüse mit einem achsensymmetrisch darüber angeordneten Schmelzetiegel.

Fig. 3 und Fig. 4 den Einlaufteil mit seitlich versetztem Schmelztiegel.

Fig. 5 den Einlaufteil mit seitlich versetztem Schmelztiegel und Einbauten zur asymmetrischen Beeinflussung der Strömung am Einlaufteil und

Fig. 6 den Einlaufteil mit seitlich versetztem Schmelztiegel und seitlicher Zuführung eines Heißgasstromes.

Fig. 7 einen Einlaufteil mit einem Schmelzetiegel, der zwei Reihen mit seitlich gegeneinander versetzten Austrittsöffnungen besitzt.

Fig. 8 die Anordnung der Austrittsöffnungen (Draufsicht) bei dem Schmelzetiegel nach Fig. 7 und

Fig. 9 ein Beispiel für die Durchmesser-Häufigkeitsverteilung einer mit Hilfe der erfindungsgemäßen Vorrichtungen hergestellten Fasercharge.

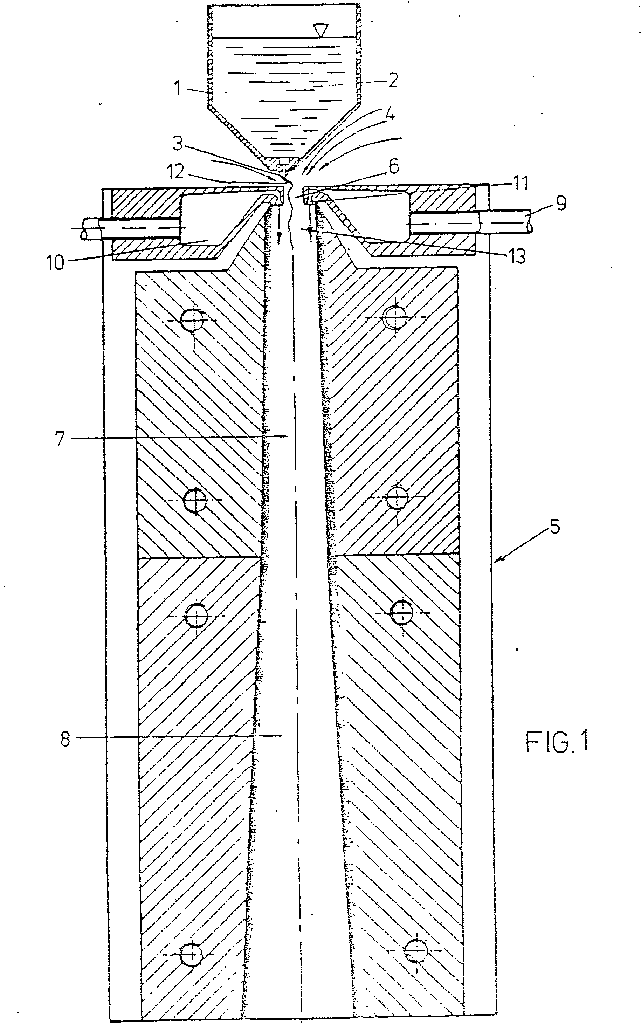

Gemäß Figur 1 befindet sich in einem elektrisch beheizten Platintiegel 1 eine Mineralschmelze 2, z. B. eine Glas- oder Diabasschmelze. Der aus der Austrittsöffnung 3 am Boden des Tiegels 1 austretende Schmelzestrang bildet einen Primärfaden 12, der vom Blasmedium 4 (Umgebungsluft) erfaßt und in die Ziehdüse 5 eingesaugt wird. Die Ziehdüse 5 besteht aus einem Einlaufteil 6, einem Faserausziehteil 7 und einem daran anschließenden Unterschalldiffusor 8. Der gesamte Düsenkanal hat hier rechteckigen Querschnitt. Der Einlaufteil 6 schließt zur Tiegelseite hin scharfkantig ab und besitzt eine Länge von 2,5 bis 9 mm, vorzugsweise 2,5 bis 4 mm. Der Abstand zwischen der Austrittsöffnung 3 im Tiegel 1 und der Oberkante des Einlaufteils 6 beträgt 0,3 bis 4 mm, vorzugsweise 0,5 bis 2 mm. Der Durchmesser der Austrittsöffnungen 3 liegt zwischen 0,2 bis 1,5 mm, vorzugsweise zwischen 0,3 und 0,8 mm.

Über den Anschluß 9 wird in üblicher Weise ein Treibmittel, z. B. Luft oder Dampf durch die Treibmittelkammern 10 und die Lavaldüsen 11 mit Überschallgeschwindigkeit in das Faserausziehteil 7 eingeblasen. Die am unteren Ende der Ziehdüse 5 austretenden Fasern werden in Form eines Vlieses auf einem Transportband (nicht gezeigt) abgeschieden.

Es hat sich gezeigt, daß die Strömungsverhältnisse zwischen Tiegel 1 und Ziehdüse 5 sowie im Einlaufteil 6 und dem daran anschließenden Zerfaserungsteil 7 von entscheidender Bedeutung für die Erzeugung von feinen Fasern mit einer engen Durchmesserverteilung sind. Zwischen Tiegel 1 und Oberkante des Einlaufteils 6 sollte ein möglichst hoher, zu den Rändern hin zunehmender Druckgradient (z = Längsrichtung) vorherrschen. Maßgebend ist dabei im Vergleich zu bekannten Vorrichtungen der außerordentlich geringe Abstand zwischen Tiegelunterseite und Oberkante der Ziehdüse 5 sowie der scharfkantige Einlaufteil 6. Als Folge dieser Anordnung stellt sich am Eintritt in die Ziehdüse 5 ein Strömungsprofil ein, das unmittelbar an den Austrittsöffnungen 3 eine verhältnismäßig starke Querkomponente besitzt, die zum Einlaufteil 6 hin zugunsten der Längskomponente abnimmt. Dies bedeutet, daß der aus der Öffnung 3 austretende Primärfaden 12 einer turbulenten Queranströmung und gleichzeitig einem sehr starken Druckgradienten ausgesetzt wird, wodurch eine stärkere Auffächerung des Primärfadens 12 oberhalb der Ziehdüse 5 in dünnere Ausgangsfäden erreicht wird. Die so gebildeten Fasern werden dann im Zerfaserungsteil 7 weiter ausgezogen. Im Hinblick auf die Entstehung von Fasern mit einem möglichst einheitlichen Durchmesser, spielt der Druckverlauf im Zerfaserungsteil 7 eine wesentliche Rolle. Mit Hilfe der Treibmittelströme wird die Strömung so eingeregelt, daß die Strömungsgeschwindigkeit des Blasmediums am Ende des Einlaufteils zwischen 400 m/sec und 600 m/sec liegt, wobei der Druck 0,1 bis 0,4 bar beträgt. Dieser Druck bleibt nun über einen nachfolgenden Abschnitt von 30 bis 100 mm konstant, so daß im Überschallbereich der Ziehdüse ein relativ langes Düsenplateau mit konstantem Druck vorhanden ist. In dieser Zone findet nur eine geringe Vermischung des eingesaugten Blasmediums mit dem Treibmittel statt.

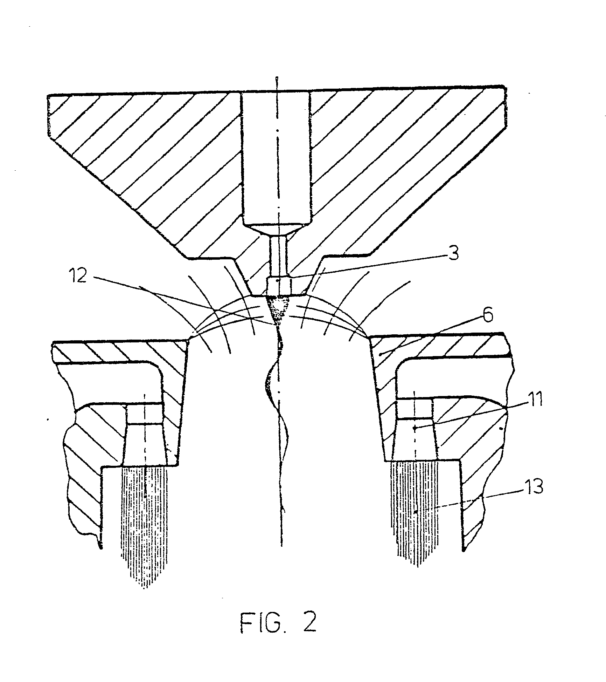

Die Figur 2 zeigt den Düseneinlauf als vergrößerten Ausschnitt. Während bei der Vorrichtung nach Figur 1 der Tiegel 1 gegenüber der Düsenachse seitlich versetzt ist, fällt bei der Vorrichtung nach Figur 2 die Austrittsöffnung 3 mit der Düsenachse zusammen. In Figur 2 ist das Druckprofil am Düseneinlauf sowie die Lavalledüsen 11 mit den Treibstrahlen 13 besonders deutlich zu sehen. Bei der Anordnung nach Figur 2 ist das Strömungsfeld achsensymmetrisch. Im Gegensatz dazu besitzt die Strömung am Einlauf bei der Vorrichtung nach Figur 1 eine so starke Querkomponente, daß der Primärfaden 12 seitlich weggeblasen wird.

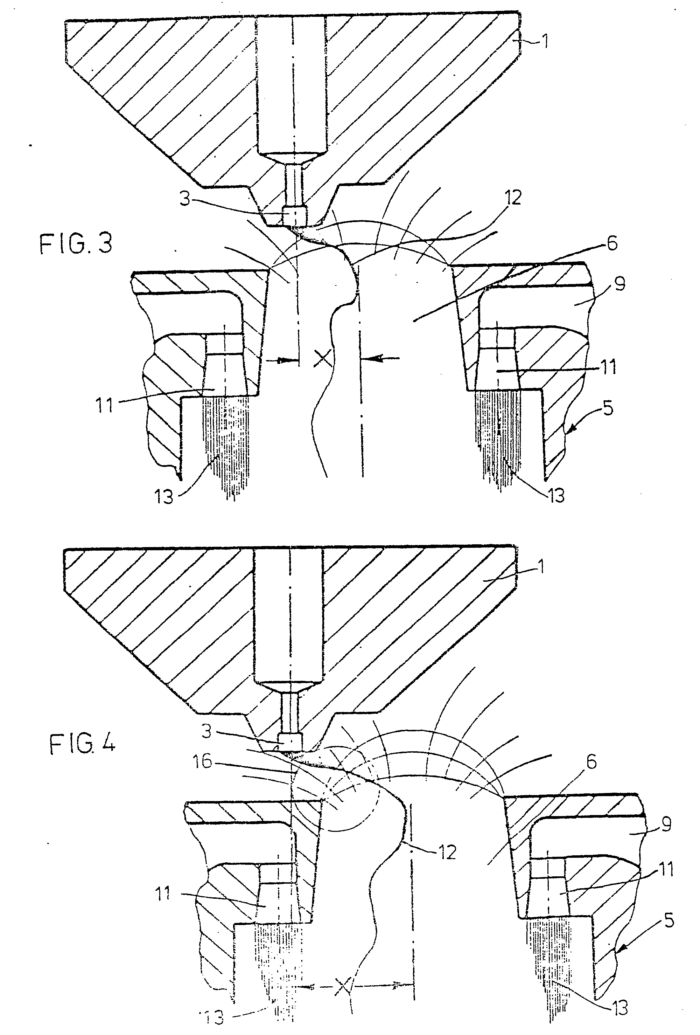

Die Figuren 3 und 4 entsprechen wiederum einem vergrößerten Ausschnitt in Figur 1. Die Tiegelaustrittsöffnungen 3 sind in beiden Fällen (unterschiedlich stark) seitlich gegenüber der Düsenachse versetzt. Bei einem Vergleich der Strömungsfelder in den Figuren 3 und 4 erkennt man, daß die Querkomponente der Strömung umso stärker ausgeprägt ist, je größer die seitliche Versetzung ist. Dadurch wird eine stärkere Queranströmung der Primärfäden und damit eine feinere Zerfaserung bereits vor dem Eintritt in die Ziehdüse erreicht.

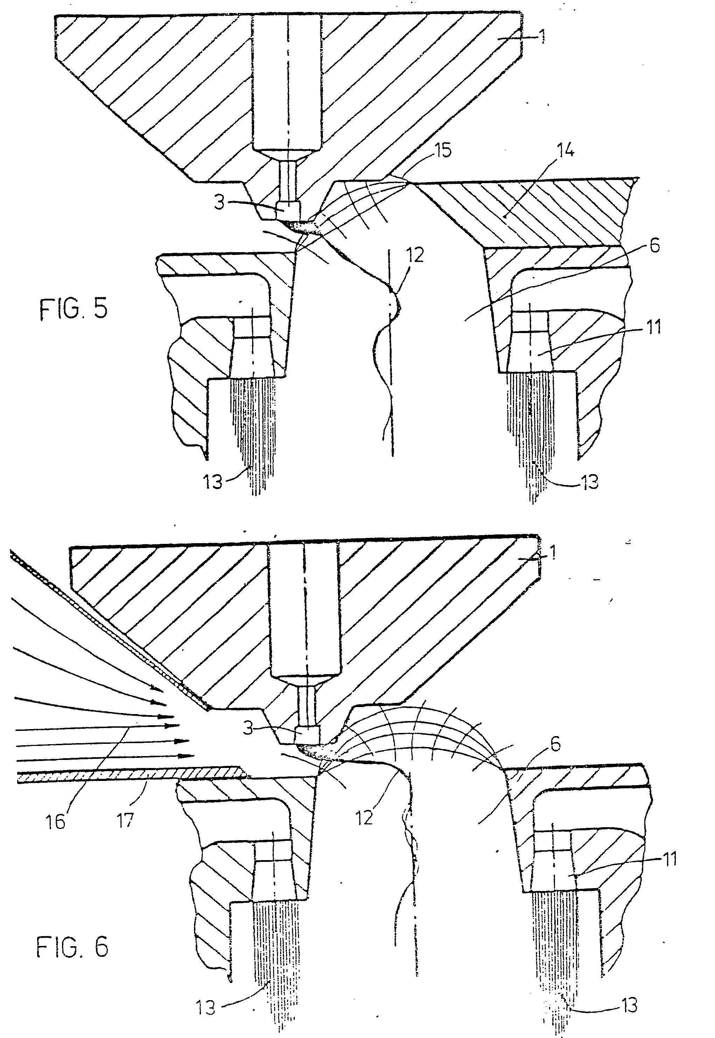

Gemäß Figur 5 wird eine noch stärkere Asymmetrie der Strömung am Düseneinlauf durch einen auf die Ziehdüse 5 aufgesetzten Leitkörper 14 erzeugt, der eine einseitige Querschnittsverengung 15 zwischen Tiegel 1 und Ziehdüse bewirkt. Auf diese Weise können der Turbulenzgrad und der Druckgradient unmittelbar vor dem Einlaufteil 6 noch weiter gesteigert werden.

Entsprechend einer Weiterentwicklung der Erfindung gemäß Figur 6 wird der Primärfaden bei der seitlich versetzten Anordnung einseitig von einem Heißgasstrom 16 angeblasen. Der Heißgasstrom 16 wird durch einen Leitkanal 17 zugeführt. Die Temperatur des Heißgasstromes kann im Bereich von 800 bis 1 400 °C eingestellt werden. Auf diese Weise können besonders feine Fasern hergestellt werden.

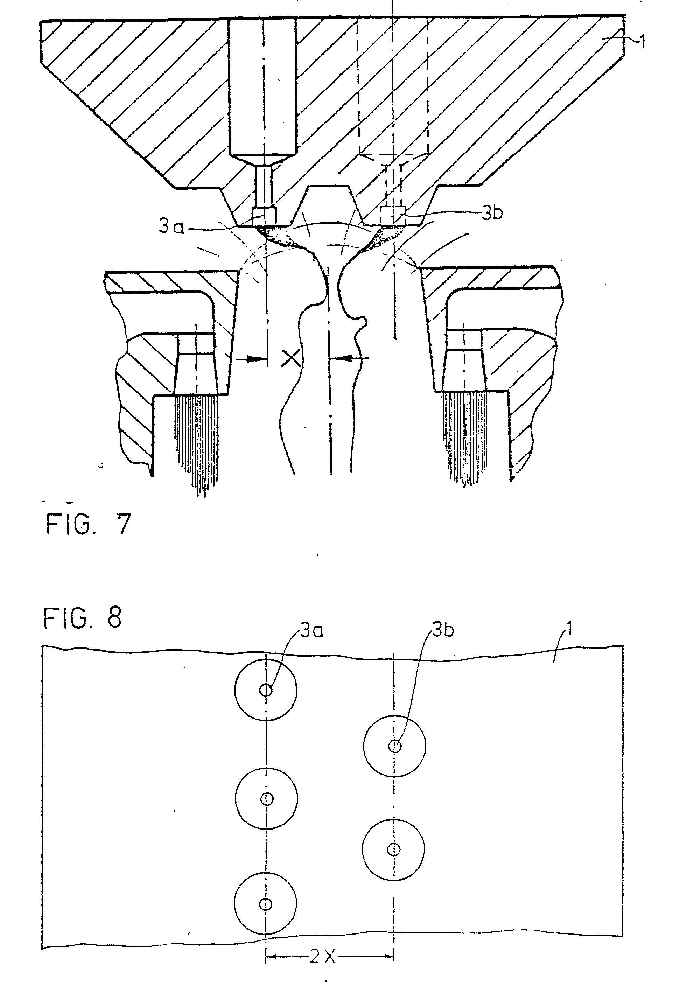

Eine weitere Variante besteht darin, daß der Tiegel 1 zwei Reihen von Austrittsöffnungen 3a, 3b, besitzt (gem. Fig. 7 und Fig. 8), die seitlich um den gleichen Betrag (x) gegenüber der Düsenachse versetzt sind (s. Fig. 7). Außerdem sind die Austrittsöffnungen 3a, 3b zickzackförmig angeordnet ; d. h. die Austrittsöffnungen 3a der einen Reihe stehen den Austrittsöffnungen 3b der anderen Reihe nicht gegenüber, sondern sind jeweils auf Lücke gesetzt (s. Fig. 8). Der Abstand der beiden Reihen beträgt 0,8 bis 5 mm, vorzugsweise 1,5-2,5 mm. Mit einer solchen Anordnung kann die Wirtschaftlichkeit der Faserherstellung, insbesondere bei Fadendurchmessern > 1 µm deutlich verbessert werden.

Der Einlaufteil 6 der Ziehdüse 5 hat, insbesondere bei den Vorrichtungen nach Fig. 7 bis 8 rechteckigen Querschnitt und erweitert sich dann in Strömungsrichtung trapezförmig.

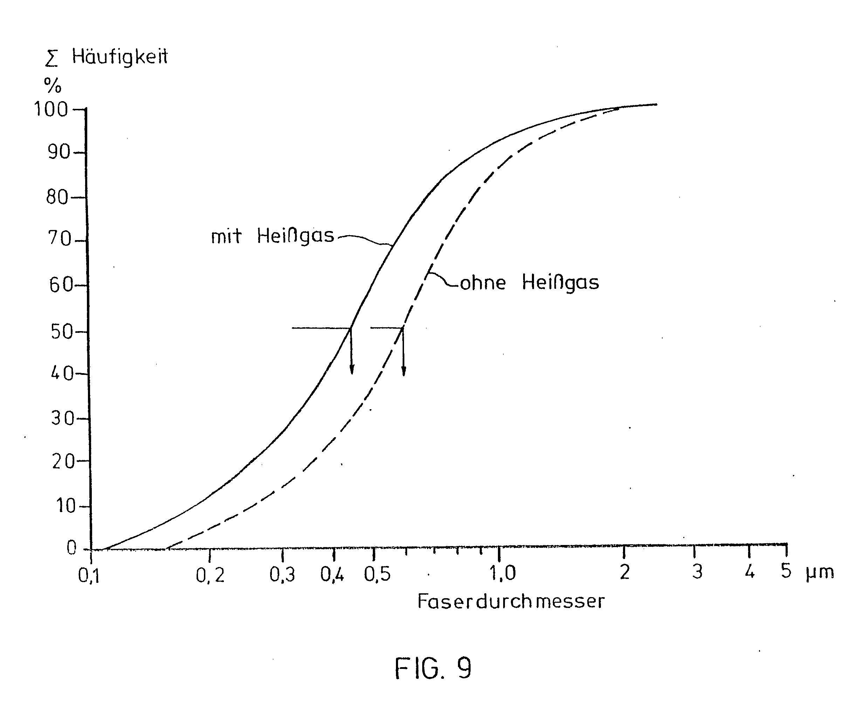

In Fig. 9 ist die Durchmesserhäufigkeitsverteilung für Mikroglasfasern dargestellt, die mit den oben beschriebenen Vorrichtungen hergestellt wurden. Aufgetragen ist die Summenhäufigkeit in Prozent als Funktion des Faserdurchmessers (in logarithmischem Maßstab). Die ausgezogene Kurve ergab sich bei der Herstellung von Mikroglasfasern mit einer Vorrichtung nach Fig. 6, wobei von einem zusätzlich eingeblasenen Heißgasstrom Gebrauch gemacht wurde. Ohne Heißgas ergab sich die gestrichelte Kurve. Die Summenhäufigkeit besagt, daß z. B. bei der durchgezogenen Kurve (mit Heißgas) 60 % der erzeugten Mikroglasfasern einen Durchmesser < 0,5 µm besitzen, während in diesem Fall 40 % der Glasfasern einen Durchmesser zwischen 0,5 µm und 2 µm aufweisen. Je steiler die Kurve ist, desto enger ist die Häufigkeitsverteilung. Die Ableitung der Kurve ergibt die übliche Gauß-Verteilung der Häufigkeit. Durch Einblasen von Heißgas zwischen Ziehdüse 5 und Tiegelaustrittsöffnungen 3 kann die Durchmesserverteilung zu kleineren Werten verschoben werden.

## Patentansprüche

1. Vorrichtung zur Herstellung feiner Mineralfasern, insbesondere Glas- oder Diabasfasern nach dem Düsenblasverfahren, bestehend aus einem Schmelzetiegel (1) mit einer oder mehreren Reihen von Austrittsöffnungen (3) im Boden, aus denen Primärfäden (12) austreten, die im Bereich der Tiegelaustrittsöffnungen von dem mit hoher Strömungsgeschwindigkeit strömenden Blasmedium (4) erfaßt werden, wobei mit zunehmendem axialen Abstand von den Austrittsöffnungen (3) die Querkomponente der Strömung zugunsten der Längskomponente abnimmt und anschließend in einer divergierenden Ziehdüse (5) durch das eingesaugte Blasmedium zerfasert werden und einem an den divergierenden Teil der Ziehdüse (5) anschließenden Unterschalldiffusor (8), dadurch gekennzeichnet,

a) daß der Durchmesser der Tiegelaustrittsöffnungen (3) 0,2 mm bis 1,5 mm, vorzugsweise 0,3 mm bis 0,8 mm, beträgt,

b) daß der Eintrittsquerschnitt eines, sich in Strömungsrichtung erweiternden Einlaufteils (6) an der Oberkante der Ziehdüse (5) eine scharfkantige Begrenzung aufweist,

c) daß die Ziehdüse (5) mit ihrem Einlaufteil (6) in einem Abstand von 0,3 mm bis 4 mm, vorzugsweise 0,5 mm bis 2 mm, unterhalb der Austrittsöffnungen (3) angeordnet ist.

d) daß die Länge des sich erweiternden Einlaufteils (6) 2,5 bis 9 mm, vorzugsweise 2,5 bis 4 mm, beträgt,

e) daß die Strömungsgeschwindigkeit des Blasmediums am Ende des Einlaufteils (6) 400 m/sec bis 600 m/sec bei einem Druck von 0,1 bar (0,01 MPa) bis 0,4 bar (0,04 MPa) beträgt, wobei dieser Druck über einen nachfolgenden Abschnitt von 30 bis 100 mm konstant bleibt.

2. Vorrichtung nach Anspruch 1, dadurch gekennzeichnet, daß der Schmelzetiegel (1) mit den Austrittsöffnungen (3) gegenüber der Düsenachse seitlich versetzt ist.

3. Vorrichtung nach Anspruch 1 bis 2, dadurch gekennzeichnet, daß im Einzugsquerschnitt um die Austrittsöffnungen (3) herum ein die Querströmung des Blasmediums begünstigender Leitkörper (14) einseitig auf die Ziehdüse (5) aufgesetzt ist.

4. Vorrichtung nach Anspruch 1 bis 3, dadurch gekennzeichnet, daß einseitig zwischen dem Tiegel (1) und dem Einlaufteil (6) der Ziehdüse ein Heißluftkanal (17) angeordnet ist.

5. Vorrichtung nach Anspruch 1 bis 4, dadurch gekennzeichnet, daß der Tiegel (1) zwei Reihen von Austrittsöffnungen (3a, 3b) aufweist, wobei diese Reihen gegenüber der Düsenachse um den gleichen Betrag seitlich versetzt sind und die Austrittsöffnungen (3a) gegenüber den Austrittsöffnungen (3b) in Richtung der Reihe gegeneinander verschoben angeordnet sind.

## Claims

1. Apparatus for the production of fine mineral fibres, in particular glass or diabase fibres, by the blast drawing process, comprising a melting crucible (1) having one or more rows of outlet openings (3) in the bottom, from which primary threads (12) emerge, which threads are gripped in the region of the crucible outlet opening by the blast medium (4) which is flowing at high velocity, the transverse component of the flow decreasing in favour of the longitudinal component with increasing axial distance from the outlet openings (3), and the threads are then broken up into fibres in a diverging drawing nozzle (5) by the blast medium which has been sucked in, the apparatus further comprising a subsonic diffuser (8) following the diverging part of the drawing nozzle (5), characterised in that

a) the diameter of the crucible outlet openings (3) is from 0.2 mm to 1.5 mm, preferably from 0.3 mm to 0.8 mm,

b) the inlet cross section of an inlet part (6) which widens out in the direction of flow has a sharp edged boundary at the top edge of the drawing nozzle (5),

c) the drawing nozzle (5) is arranged with its inlet part (6) at a distance of from 0.3 mm to 4 mm, preferably from 0.5 mm to 2 mm, below the outlet openings (3),

d) the length of the inlet part (6) of progressively increasing width is from 2.5 to 9 mm, preferably from 2.5 to 4 mm, and

e) the flow velocity of the blast medium at the end of the inlet part (6) is from 400 m/sec to 600 m/sec at a pressure of from 0.1 bar (0.01 MPa) to 0.4 bar (0.04 MPa), this pressure remaining constant over the next following section of from 30 to 100 mm.

2. Apparatus according to Claim 1, characterised in that the melting crucible (1) has its outlet openings (3) laterally displaced from the nozzle axis.

3. Apparatus according to Claims 1 to 2, characterised in that a baffle body (14) which promotes the transverse flow of the blast medium is placed unilaterally on the drawing nozzle (5) in the intake cross section around the outlet openings (3).

4. Apparatus according to Claims 1 to 3, characterised in that a hot air channel (17) is arranged on one side between the crucible (1) and the inlet part (6) of the drawing nozzle.

5. Apparatus according to Claims 1 to 4, characterised in that the crucible (1) has two rows of outlet openings (3a, 3b), these rows being displaced laterally from the nozzle axis by the same amount and the outlet openings (3a) being staggered in relation to the outlet openings (3b) in the direction of the row.

**Revendications**

1. Dispositif de fabrication de fibres minérales fines, notamment de fibres de verre ou de diabase, selon le procédé de filage-soufflage, comportant un creuset (1) pour matière en fusion, lequel est doté d'une ou plusieurs rangées d'ouvertures de sortie (3) d'où sortent des fils primaires (12) qui, dans la région de ces ouvertures de sortie du creuset, sont pris par un fluide de soufflage (4) en écoulement rapide, la composante transversale de l'écoulement étant, pour un éloignement axial croissant par rapport aux ouvertures de sortie (3), décroissante au profit de la composante longitudinale, et qui, dans une filière divergente (5), sont ensuite effilochés en fibres par le fluide de soufflage insufflé, et comportant un diffuseur subsonique (8) se raccordant à la partie divergente de la filière (5), caractérisé

a) par le fait que le diamètre des ouvertures de sortie (3) du creuset est de 0,2 mm à 1,5 mm, de préférence 0,3 mm à 0,8 mm ;

b) par le fait que la section droite d'entrée d'une partie entrée (6) s'élargissant dans la direction de l'écoulement présente une délimitation à arête vive sur le bord supérieur de la filière (5) ;

c) par le fait que la filière (5) est agencée avec sa partie entrée (6) à une distance de 0,3 mm à 4 mm, de préférence 0,5 mm à 2 mm, en dessous des ouvertures de sortie (3) ;

d) par le fait que la longueur de la partie entrée s'élargissant (6) est de 2,5 à 9 mm, de préférence 2,5 à 4 mm ;

e) par le fait que la vitesse d'écoulement du fluide de soufflage à l'extrémité de la partie entrée (6) est de 400 m/sec à 600 m/sec pour une pression de 0,1 bar (0,01 MPa) à 0,4 bar (0,04 MPa), cette pression restant constante sur une portion suivante de 30 à 100 mm.

2. Dispositif selon revendication 1, caractérisé par le fait que le creuset (1) avec ses ouvertures de sortie (3) est décalé latéralement par rapport à l'axe de la filière.

3. Dispositif selon revendications 1 à 2, caractérisé par le fait qu'un déflecteur (14) favorisant un écoulement transversal du fluide de soufflage est rapporté unilatéralement sur la filière (5), dans la section d'alimentation entourant les ouvertures de sortie (3).

4. Dispositif selon revendications 1 à 3, caractérisé par le fait qu'un canal d'air chaud (17) est aménagé unilatéralement entre le creuset (1) et la partie entrée (6) de la filière.

5. Dispositif selon revendications 1 à 4, caractérisé par le fait que le creuset (1) présente deux rangées d'ouvertures de sortie (3a, 3b), ces rangées étant décalées latéralement de la même valeur par rapport à l'axe de la filière, et les ouvertures de sortie (3a) étant agencées avec un décalage mutuel sur la direction de la rangée, par rapport aux ouvertures de sortie (3b).

0 200 071

FIG.1

FIG. 2

FIG. 3

FIG 4

FIG. 5

FIG. 6

FIG. 7

FIG. 8

FIG. 9

0 200 071